Europäisches Patentamt

European Patent Office

Office européen des brevets

(11) Publication number: **0 475 331 A2**

## EUROPEAN PATENT APPLICATION

(21) Application number: **91115221.3**

(22) Date of filing: **09.09.91**

(51) Int. Cl.5: **H04J  14/02**

(30) Priority: **10.09.90 JP 239391/90**

(43) Date of publication of application:
**18.03.92 Bulletin  92/12**

(84) Designated Contracting States:
**DE FR GB**

(71) Applicant: **CANON KABUSHIKI KAISHA**
**30-2, 3-chome, Shimomaruko, Ohta-ku**
**Tokyo(JP)**

(72) Inventor: **Imano, Haruo, c/o CANON**
**KABUSHIKI KAISHA**
**30-2, 3-chome, Shimomaruko**
**Ohta-ku, Tokyo(JP)**
Inventor: **Sakanaka, Tetsuo, c/o CANON**
**KABUSHIKI KAISHA**

**30-2, 3-chome, Shimomaruko**
**Ohta-ku, Tokyo(JP)**
Inventor: **Degura, Yasusaburo, c/o CANON**
**KABUSHIKI KAISHA**
**30-2, 3-chome, Shimomaruko**
**Ohta-ku, Tokyo(JP)**
Inventor: **Takahashi, Yasuhiro, c/o CANON**
**KABUSHIKI KAISHA**
**30-2, 3-chome, Shimomaruko**
**Ohta-ku, Tokyo(JP)**

(74) Representative: **Pellmann, Hans-Bernd,**
**Dipl.-Ing. et al**
**Patentanwaltsbüro Tiedtke-Bühling-Kinne &**
**Partner, Bavariaring 4**
**W-8000 München 2(DE)**

(54) **Light transmission system with subcarriers.**

(57) In a light transmission system, sub-carriers having such an interval therebetween as to avoid the overlap of adjacent channels are modulated by respective input information, light sources associated with the respective input information are intensity-modulated by the respective modulated sub-carriers, and the intensity-modulated light signals are multiplexed and transmitted through a common transmission line.

F I G. 2

## BACKGROUND OF THE INVENTION

### Field of the Invention

The present invention relates to a light transmission system which multiplexes and transmits input information of a plurality of channels through a common transmission line in a form of light signal, and O/E (opto-electrical) converts it and demultiplexes signals in a receiving station.

### Related Background Art

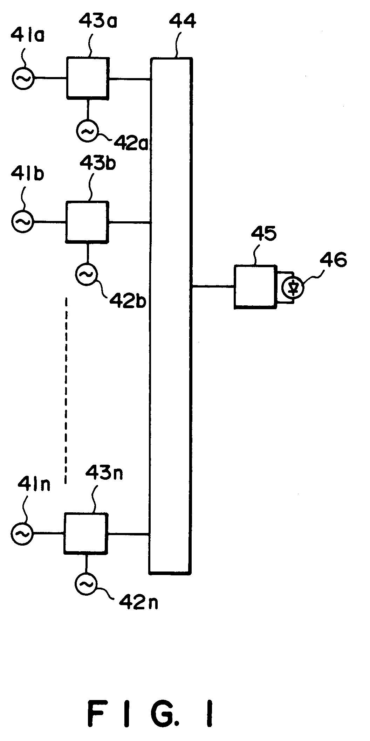

In a prior art frequency-division multi-transmission system in light communication, sub-carriers having such an interval as to avoid the overlap of adjacent channels are frequency-modulated by input information of a plurality of channels, they are multiplexed, and one light source is intensity modulated by the multiplexed signal for the transmission in the form of light signal. This method is briefly shown in Fig. 1 in which numerals 41a - 41n denote input information, numerals 42a - 42n denote sub-carriers, numerals 43a - 43n denote modulators, numeral 44 denotes a multiplexor, numeral 45 denotes a driver and numeral 46 denotes a light emitting device.

However, in the prior art, since one light source or light emitting device is modulated by a plurality of channels, a current for each channel must be selected such that a total peak current is below a rated limit of the single light source, because otherwise the light source would be broken.

In order to avoid a secondary distortion or a mutual modulation distortion (which causes a problem in the transmission of the multiplexed signal) due to a non-linearity in a power-current characteristic of the light source, a modulation factor of each channel is usually selected to approximately 0.1.

Because of the above limitations, an effective photo-output of each channel is low, and as a result an overall transmission margin is low. This raises a reliability problem.

## SUMMARY OF THE INVENTION

It is an object of the present invention to provide a light transmission system which can relieve the above limitations.

In order to achieve the above object, in accordance with the present invention, a light transmission system multiplexes input information of a plurality of channels through a common transmission line (which comprises a free space or an optical fiber) in a form of light signal and transmits the multiplexed signal, which is demultiplexed at a receiving station. In a transmitting station, sub-carriers selected to have such an interval therebetween so that adjacent channels do not overlap are modulated by the respective input information, and a plurality of light sources one for each channel are intensity-modulated by the modulated sub-carriers and the resulting light signals are combined (by a half-mirror, a lens or an optical fiber coupler) and it is transmitted through the common transmission line.

The pre-modulation of the sub-carriers by the input information need not be done if it is not necessary.

## BRIEF DESCRIPTION OF THE DRAWINGS

Fig. 1 shows a light transmission system,
Fig. 2 shows a configuration of one embodiment of the light transmission system of the present invention,
Figs. 3A to 3E illustrate a light multiplexing method,
Fig. 4 shows a configuration of another embodiment of the light transmission system of the present invention, and
Fig. 5 shows an optical fiber transmission system in accordance with other embodiment of the present invention.

## DETAILED DESCRIPTION OF THE PREFERRED EMBODIMENTS

The preferred embodiments of the present invention will be explained with reference to the drawings.

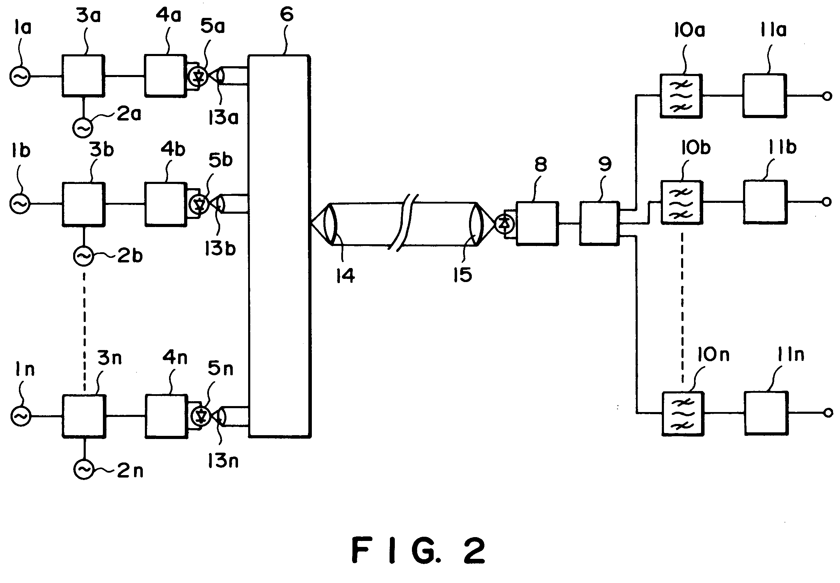

In a light space transmission system shown in Fig. 2, numerals 1a - 1n denote input analog information which differ from each other. The input analog information 1a - 1n are frequency-modulated by modulators 3a - 3n with sub-carriers 2a - 2n having such as interval therebetween as to avoid the overlap of adjacent channels.

The modulated signals thus produced are supplied to drivers 4a - 4n which convert them to intensity-modulated light signals by light emitting devices 5a - 5n such as laser diodes (LD's) or light emitting diodes (LED's). The converted light signals are supplied to a light multiplexor 6 through lens systems 13a - 13n and a space and are multiplexed thereby.

The multiplexed light signal is collimated by a lens system 14 and sent out to the space.

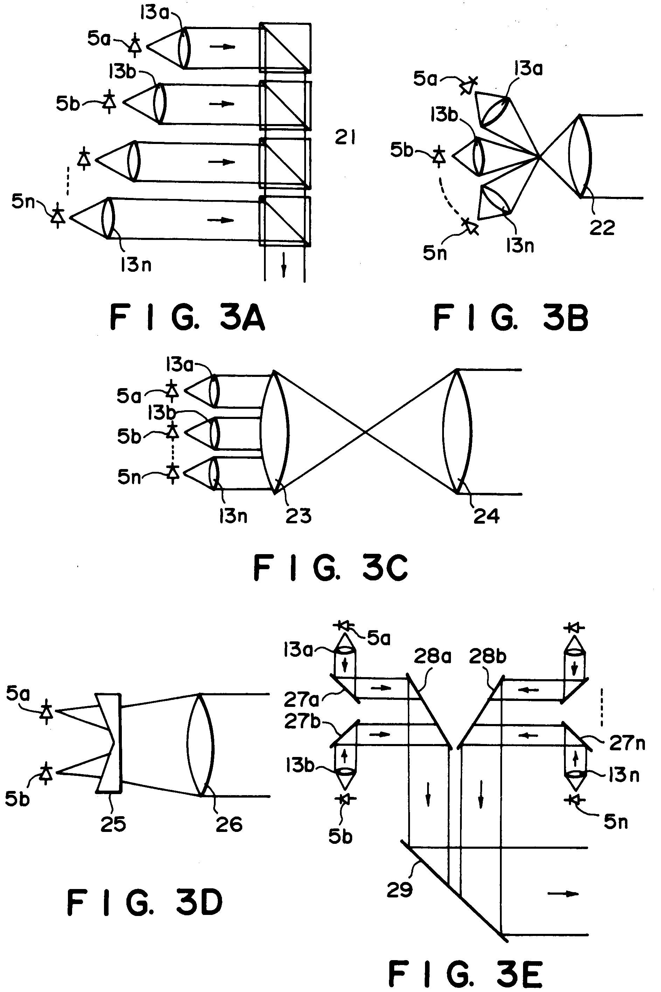

The light multiplexing by the light multiplexor 6 may be done by using a lens or a half-mirror. Figs. 3A to 3E show examples thereof. In Fig. 3A, light signals (collimated lights) from the lenses 13a - 13n are multiplexed by a half-mirror 21. (Distances from the light emitting devices 5a - 5n to the half-mirror 21 are different in order to attain a uniform light path length.) In Fig. 3B, the light signals (conversing lights) from the lenses 13a - 13n are focused to a focal point of a lens 22 and multiplexed thereby. In Fig. 3C, the light signals (collimated lights) from the lenses 13a - 13n are focused to a focal point of a first lens 23 and multiplexed by a second lens 24 (the focusing point thereof is a focal point of the second lens 24). In Fig. 3D, beams from the light emitting devices 5a and 5b are multiplexed by a prism and it is collimated by a lens 26. In Fig. 3E, the light signals (collimated lights) from the lenses 13a - 13n are multiplexed by reflection mirrors 27a - 27n, 28a, 28b and 29.

Turning back to Fig. 2, the light signal transmitted through the space is directed by a lens system 15 to an O/E converter 8 including a photo-sensing device such as a pin photo-diode (pin PD) or an avalanche photo-diode (APD) and converted to an electrical signal thereby. The converted electrical signal is split by a demultiplexor 9 such as a power splitter into the number equal to the number of input analog information 1a - 1n at the transmitting station. The split multiplexed signals are separated by band-pass filters 10a - 10n which pass only the bands of the modulated waves. The separated signals are detected by detectors 11a - 11n so that the original signals corresponding to the input analog information 1a - 1n are reproduced.

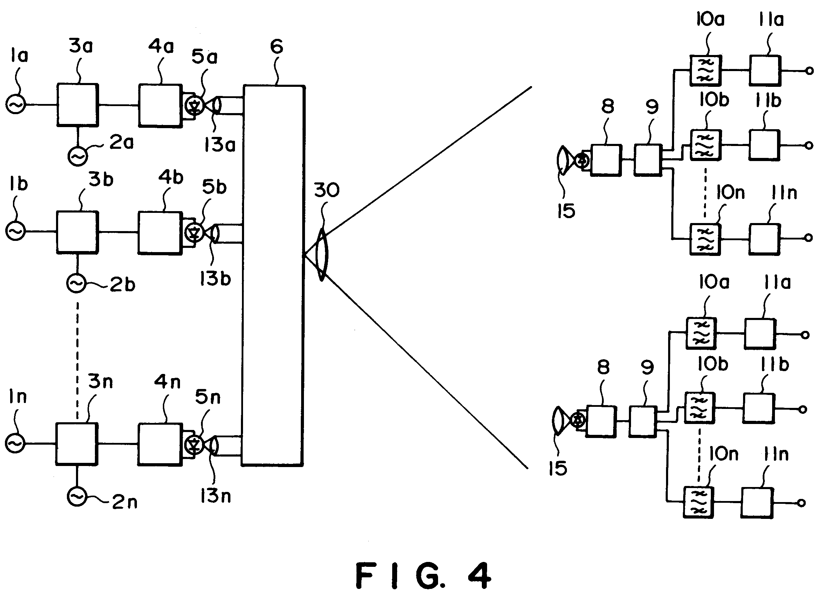

In the embodiment of Fig. 2, the one-to-one light space communication is explained. Alternatively, as shown in Fig. 4, the light signal may be diffused by a lens system 30 at the transmitting station and it may be received by a plurality of receivers in order to complete a one-to-N light space communication system. In this case, since the multiplexed light signal from the transmitting station is diffused, the total receiving light power is reduced and a power per channel is also reduced. Thus, the effect of the present invention which permits larger current for each channel and assures the generation of the light signal in each channel is more remarkable in this case.

While the light signals are applied to the light multiplexor 6 through the lens systems 13a - 13n in the embodiment, the lens systems need not be used (see Fig. 3D), and the light signals may be applied to the light multiplexor 6 not through the space but through the optical fiber. The light multiplexor which adapts to the input method may be provided.

In the embodiment of Fig. 2, the space is used as the transmission line, although the present invention is also applicable to a wired transmission system using an optical fiber.

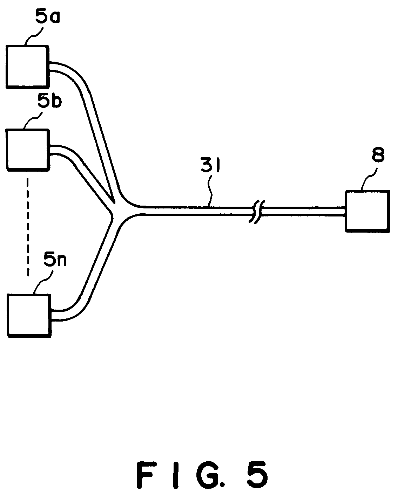

For example, as shown in Fig. 5, the light signals from the light emitting devices 5a - 5n such as LD's or LED's may be multiplexed by an optical fiber (fiber coupler) shaped as shown and it may be transmitted to a receiving station directly or through another optical fiber.

In accordance with the present invention, input information of a plurality of channels are multitransmitted through the common transmission line in the form of light signal, and it is O/E-converted and demultiplexed at the receiving station. At the transmitting station, the sub-carriers selected to have such an interval therebetween as to avoid the overlap of the adjacent channels are modulated by the respective input information, and the light sources corresponding to the respective channels are intensity-modulated by the respective modulated waves (or directly by the respective input information), and the resulting light signals are multiplexed and it is sent through the common transmission line. Accordingly, the current for each channel may be larger than that in the prior art (the light power per channel may be larger) and the modulation factor may be larger than that in the prior art within the extent that the secondary distortion or the mutual modulation distortion due to the non-linearity in the power-current characteristic of the light source. (Since the photo-detector has a very good linearity and permits the design of highly linear transistor tranceiver, most of non-linearity in the system are due to the light source.) As a result, a transmission margin of the overall system increases, which leads to the improvement of the system reliability, and the increase of the transmission distance.

Further, since the common transmission line is used, the system can be realized without losing the advantage of the multiplexed transmission.

Since the transmission line is shared in transmitting the information of the plurality of channels, only one set of lens systems and photo-sensing devices are needed for the transmitter and the receiver. Thus, it is not necessary to provide a plurality of transmission lines or plurality of transmitters/receivers.

In a light transmission system, sub-carriers having such an interval therebetween as to avoid the overlap of adjacent channels are modulated by respective input information, light sources associated with the respective input information are intensity-modulated by the respective modulated sub-carriers, and the intensity-modulated light signals are multiplexed and transmitted through a common transmission line.

## Claims

1. A light transmission system comprising the steps of:

    modulating sub-carriers having such an interval therebetween as to avoid the overlap of adjacent channels, by respective input information;

intensity-modulating light sources associated with the respective input information, by the modulated sub-carriers; and

multiplexing the intensity-modulated light signals and transmitting the multiplexed signal through a common transmission line.

2. A light transmission system according to Claim 1 wherein said transmission line is a free space.

3. A light transmission system according to Claim 1 wherein said transmission line is an optical fiber.

4. A light transmission system comprising the steps of:

intensity-modulating light sources associated with respective input information; and

multiplexing the intensity-modulated light signals and transmitting the multiplexed signal through a common transmission line.

5. A light transmission system comprising the steps of:

frequency-modulating input a plurality of input information into sub-carriers having such an interval therebetween as to avoid the overlap of adjacent channels;

intensity-modulating light sources associated with the respective input information by the respective frequency-modulated sub-carriers; and

multiplexing the intensity-modulated light signals and transmitting the multiplexed signal through a common transmission line.

6. A light transmission system comprising the steps of:

frequency-modulating a plurality of input information into sub-carriers having such an interval therebetween as to avoid the overlap of adjacent channels;

intensity modulating light sources associated with the respective input information by the respective frequency-modulated sub-carriers;

multiplexing the intensity-modulated light signals and transmitting the multiplexed signal through a common transmission line; and

receiving the transmitted light signal by a plurality of receivers.

F I G. 1

F I G. 2

F I G. 3A

F I G. 3B

F I G. 3C

F I G. 3D

F I G. 3E

# FIG. 4

EP 0 475 331 A2

# F I G. 5